# DEMANDE DE BREVET EUROPEEN

(11) **EP 2 202 102 A2**
(43) Date de publication de la demande: **30.06.2010**
(21) Numéro de dépôt: 09290998.5
(22) Date de dépôt: 29.12.2009
(51) Int. Cl.: B60D 1/00, B60D 1/173, B62D 63/06

(54) **Système de remorque à roue(s) pivotante(s)**

(30) Priorité: 29.12.2008 FR 0807465
(71) Demandeur: Deloubes, Claude, 33210 Preignac (FR)
(72) Inventeur: Deloubes, Claude, 33210 Preignac (FR)
(74) Mandataire: Oudin, Stéphane

(57) **Abrégé**

L'invention concerne un système de remorque à roue(s) pivotante(s) comportant une ferrure d'attelage (10) destinée à être fixée sur un véhicule tracteur et comportant au moins deux boules d'attelage (11) positionnées de part et d'autre de l'axe médian de ladite ferrure d'attelage (10), une remorque comprenant au moins deux systèmes de fixation (14) destinés à s'enclencher sur lesdites deux boules d'attelage (11), ladite remorque comprenant également un châssis (6) de remorque muni d'au moins un train routier (3) comportant au moins une roue (15) pivotante libre, montée dans un étrier (13) relié au châssis (6) par un axe (16) de pivotement. Le système de remorque est remarquable en ce que l'axe (16) de pivotement de la roue (15) est couplé à un frein à friction (5) anti-guidonnage comportant des moyens élastiques (17) réglables en effort pour limiter le phénomène de guidonnage en fonction de la charge transportée.

## Description

La présente invention concerne un système de remorque à roue(s) pivotante(s) destiné à être attelé à tout type de véhicule et plus particulièrement les camping-cars.

En effet, dans le cas particulier de ces véhicules, il est souvent nécessaire de recourir à des moyens de stockage extérieurs au véhicule pour transporter, par exemple, une motocyclette ou des bagages supplémentaires, en affectant le moins possible le poids total autorisé en charge du véhicule tracteur. Les remorques classiques comportent un essieu rigide avec deux roues montées fixes et un seul point d'ancrage au véhicule. Cet ancrage étant articulé de manière à ce que la remorque pivote derrière le véhicule, ces remorques classiques sont difficiles à manoeuvrer, notamment en marche arrière et ce d'autant plus avec des véhicules de grands gabarits comme le sont les camping-cars.

Les remorques du type de celle de l'invention, c'est-à-dire comportant une ou plusieurs roues pivotantes, fonctionnent selon un principe différent dans lequel l'ancrage au véhicule se fait selon deux points, de sorte que la liaison n'est pas articulée horizontalement. Ce sont la ou les roues de la remorque qui sont pivotantes, c'est-à-dire qu'elles tournent à 360° autour d'un axe vertical, ce qui permet ainsi à la remorque de suivre le véhicule tracteur. Des structures de remorque à roues pivotantes et d'adaptateur d'attelage compatibles sont données dans les documents de brevets US-4426097, US-4664403 et DE-3222602. Les solutions de construction de remorques proposées dans ces documents de l'art antérieur présentent toutefois un inconvénient majeur de stabilité de la remorque, dû à l'existence de mouvements de balayage latéraux intempestifs, également connu sous le nom de phénomène de guidonnage. Non seulement, ce phénomène de guidonnage entraîne une instabilité de l'ensemble remorqué mais provoque également une usure prématurée du pneu de la roue de la remorque. Pour assurer la sécurité du véhicule tracteur et des autres usagers de la route en garantissant la stabilité du système de remorque, un système de frein des mouvements latéraux de la roue permettant de limiter et maîtriser le phénomène de guidonnage qui survient à partir d'une certaine vitesse de circulation, apparaît donc indispensable. A cet égard, on connaît une construction de remorque suiveuse décrite notamment dans le brevet américain US4512593. Cette remorque comporte deux bras d'attelage et est équipée de deux roues pivotantes. Ces deux roues sont reliées entre elles par une chaîne sans fin disposée horizontalement et coopérant avec une couronne dentée placée sur le pivot des roues, de sorte que les deux roues sont simultanément entraînées dans la même direction lorsqu'elles pivotent. Cette remorque comporte un dispositif visant à éviter une rotation libre incontrôlée des axes desdites roues, consistant en une structure de frein à friction agissant sur la chaîne sans fin interconnectant les deux roues. L'action de frein étant exercée sur la chaîne sans fin, la rotation des deux roues est donc ainsi contrôlée. Toutefois, cette structure est relativement complexe et implique la présence de deux roues pivotantes ainsi que leur interconnexion.

La présente invention a pour objet d'obvier aux inconvénients de l'art antérieur et de proposer à cette fin un système de remorque à roue(s) pivotante(s) et à deux points d'ancrage dont la construction est simple, robuste, économique et inclut un dispositif anti-guidonnage agissant indépendamment sur la ou les roues pivotantes équipant la remorque.

La présente invention à ainsi pour objet un système de remorque à roue(s) pivotante(s) pour le transport d'engins motorisés, bicyclettes, coffres arrière, particulièrement pour les camping-caristes, ledit système de remorque comportant une ferrure d'attelage destinée à être fixée sur un véhicule tracteur et comportant au moins deux boules d'attelage positionnées de part et d'autre de l'axe médian de ladite ferrure d'attelage, ledit système de remorque comportant également une remorque comprenant au moins deux systèmes de fixation destinés à s'enclencher sur lesdites deux boules d'attelage, ladite remorque comprenant également un châssis de remorque muni d'au moins un train routier comportant au moins une roue pivotante libre, montée dans un étrier relié audit châssis par un axe de pivotement, ledit système de remorque étant remarquable en ce que ledit axe de pivotement de ladite roue est couplé à au moins un frein à friction anti-guidonnage comportant des moyens élastiques réglables en effort pour limiter le phénomène de guidonnage de ladite remorque de manière adaptée et en fonction de la charge transportée.

On comprend bien que cette conception du frein à friction et son positionnement, couplé à l'axe de pivotement de la roue, permet de maîtriser le phénomène de guidonnage tout en autorisant des prises d'angle de la roue permettant de prendre tout type de virages quel que soit l'angle de direction nécessaire. On comprend également bien que pour optimiser le phénomène de guidonnage, le frein à friction peut être réglé en fonction de la charge à transporter.

Les moyens élastiques réglables en effort comportent avantageusement au moins un premier et un second disques portés par ledit axe de pivotement et sollicités l'un vers l'autre par des moyens élastiques dont la tension peut être ajustée par la position de moyens de serrage le long dudit axe de pivotement.

Les systèmes de fixation destinés à s'enclencher sur lesdites boules d'attelage sont de préférence prolongés chacun par un timon constituant un côté raidisseur du châssis de la remorque. Cette construction particulière permet de renforcer la robustesse du système de remorque tout en ayant une construction simple.

Dans un mode de réalisation préféré, le train routier comporte des moyens amortisseurs réglables pour améliorer la stabilité de ladite remorque.

De manière avantageuse la partie supérieure dudit train routier comporte une glissière, lesdits moyens amortisseurs comportent au moins un moyen de rappel élastique dont une première extrémité est couplée à l'axe de ladite roue et une seconde extrémité est couplée à ladite glissière de manière à ce que la position de ladite seconde extrémité dans ladite glissière soit réglable pour pouvoir incliner ledit moyen de rappel élastique sans modification de la hauteur de ladite remorque.

On comprend bien que cette conception permet de régler la stabilité de la remorque en fonction de la charge transportée de manière particulièrement efficace et avantageuse puisque la hauteur de la remorque reste inchangée.

La glissière est de préférence courbe ce qui permet de modifier le réglage de la stabilité sans solliciter d'avantage le moyen de rappel élastique, par exemple par une variation de longueur allongement qui serait provoquée par une rainure rectiligne.

De manière avantageuse, le train routier est fixé audit châssis par l'intermédiaire d'au moins une rainure de guidage agencée pour autoriser le déplacement dudit train routier vers l'avant ou l'arrière dudit châssis afin de modifier la position du centre de gravité en fonction de la charge supportée par ladite remorque.

D'autres avantages et caractéristiques ressortiront mieux de la description qui va suivre d'exemples de réalisation du système de remorque selon l'invention en référence aux dessins annexés sur lesquels :
- les figures 1 à 6 sont respectivement des vues arrière, de profil, de face avant, de perspective trois quarts arrière de dessous, de dessus et trois quarts avant de dessus d'un mode de réalisation de la remorque du système de remorque selon l'invention dans lequel la remorque est munie d'un seul train routier;
- les figures 7 à 12 sont des vues similaires aux figures 1 à 6 et illustrent un second mode de réalisation du système de remorque selon l'invention, la remorque étant représentée liée à la ferrure d'attelage ;
- les figures 13 à 18 sont des vues similaires aux figures 1 à 6 et illustrent un troisième mode de réalisation du système de remorque selon l'invention dans lequel la remorque est munie de deux trains routiers ;
- la figure 19 est une vue de détail en perspective et en éclaté d'un train routier du système de remorque selon l'invention ;
- la figure 20 est une vue en perspective de trois quarts arrière de dessus d'un quatrième mode de réalisation de la remorque du système de remorque selon l'invention mettant en évidence la structure du châssis et l'implantation du train routier similaire à celui de la figure 19 ;
- les figures 21a et 21b sont des vues de côté du système de remorque de la figure 20 illustrant deux positions de réglage distinctes du système à ressort, correspondant chacune à une résistance spécifique des amortisseurs du train routier du système de remorque selon l'invention.

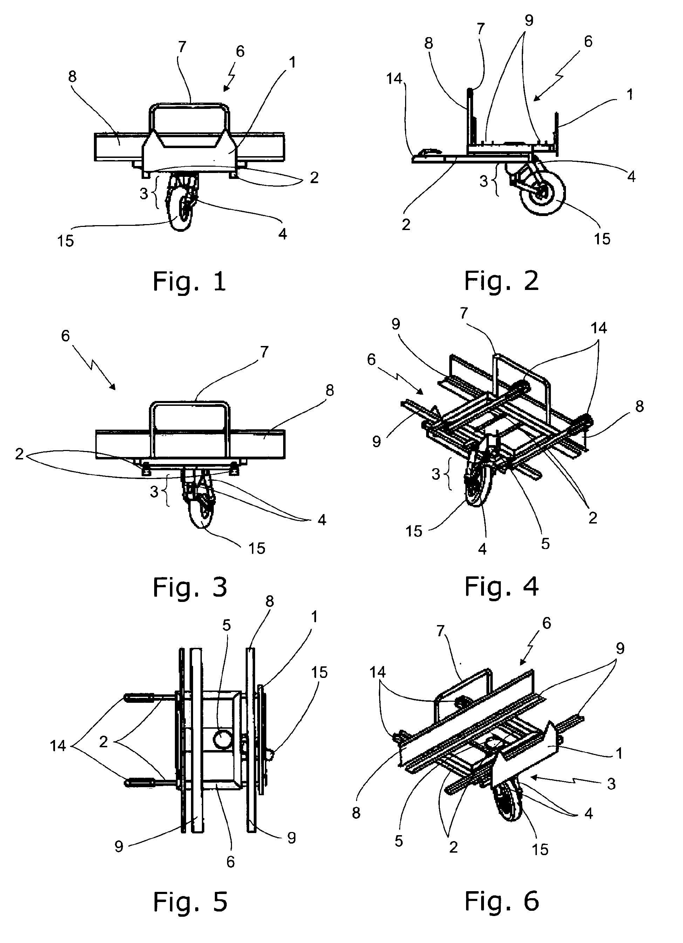

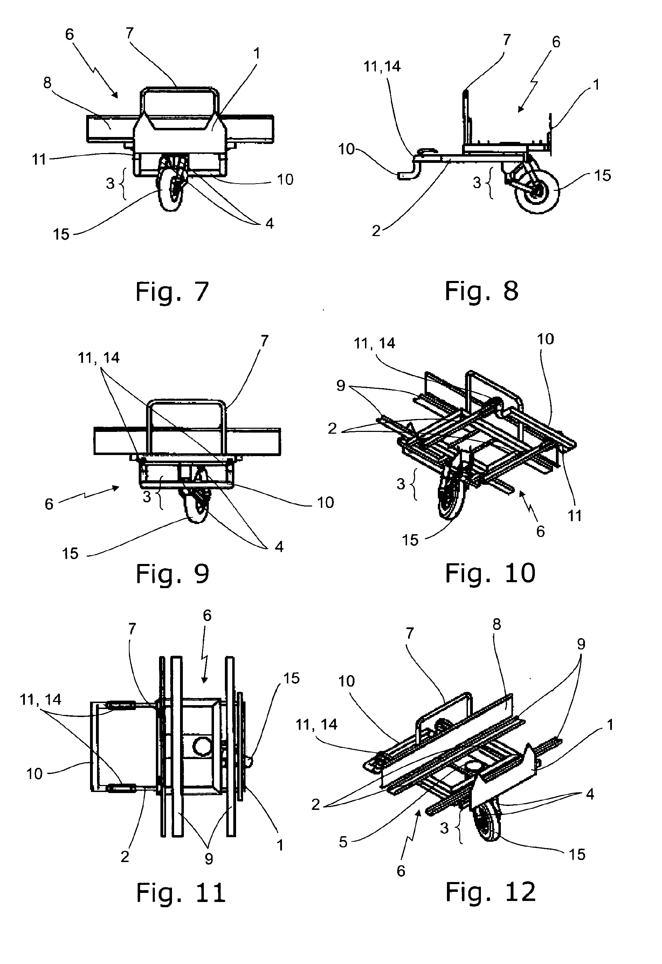

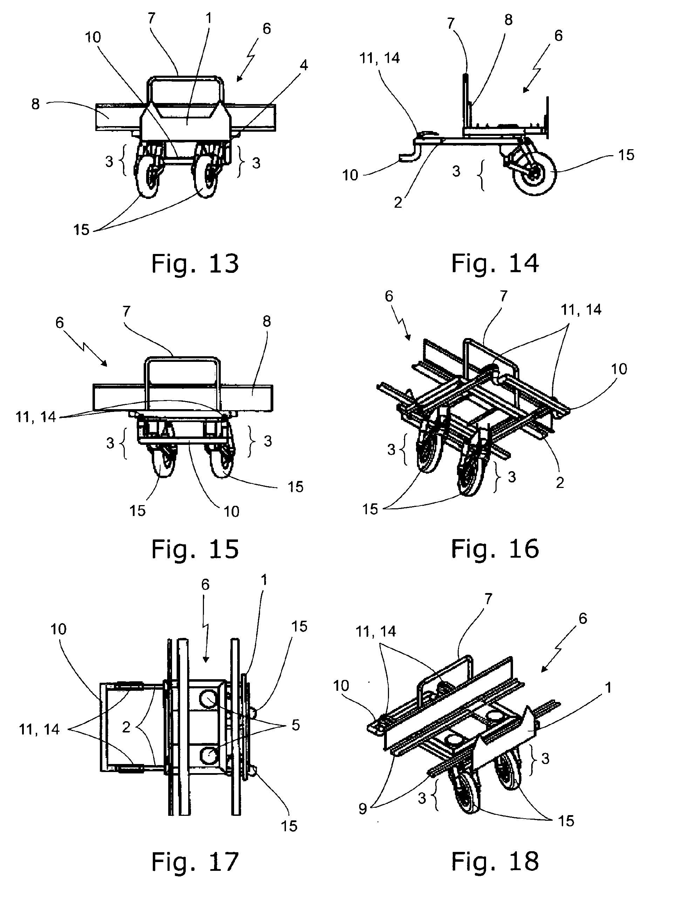

En référence aux figures 1 à 18, le système de remorque selon l'invention comporte d'une part une ferrure d'attelage 10 (représentée sur les figures 7 à 18) destinée à être fixée sur le véhicule tracteur. Cette ferrure d'attelage 10 comporte deux boules d'attelage 11 positionnées de part et d'autre de l'axe médian de la ferrure d'attelage 10 et, de préférence, à chaque extrémité. La remorque comprend deux systèmes de fixation d'attelage 14 de type standard et aptes à s'enclencher sur les boules d'attelage 11 de manière à prévenir le découplage involontaire de la ferrure d'attelage 10 par rapport à la remorque. Cette remorque comprend un châssis 6 formé pour partie de deux timons 2 constituant chacun un côté raidisseur dudit châssis 6. Ledit châssis 6 de la remorque présente une plaque 1 de rappel pour porter l'immatriculation de la remorque. Le châssis 6 comporte, selon le mode de réalisation, un ou deux trains routiers 3 et donc une ou deux roues 15. Le cas échéant, on pourra réaliser un châssis comportant trois, voire quatre trains routiers sans sortir du cadre de la présente invention. Chaque train routier 3 comporte des moyens amortisseurs 4 réglables et une roue 15. Le châssis 6 est également muni d'un arceau 7 permettant de retenir la charge transportée en cas de situation de freinage brutal et également d'assurer l'amarrage de la charge ou de l'objet transporté à la remorque. Le châssis 6 comporte également une rampe de chargement 8. Cette rampe de chargement 8 est plus particulièrement destinée à accueillir un deux-roues à moteur, par exemple de type motocyclette. Deux rails 9 destinés à accueillir des vélos sont également prévus sur le châssis 6 de la remorque.

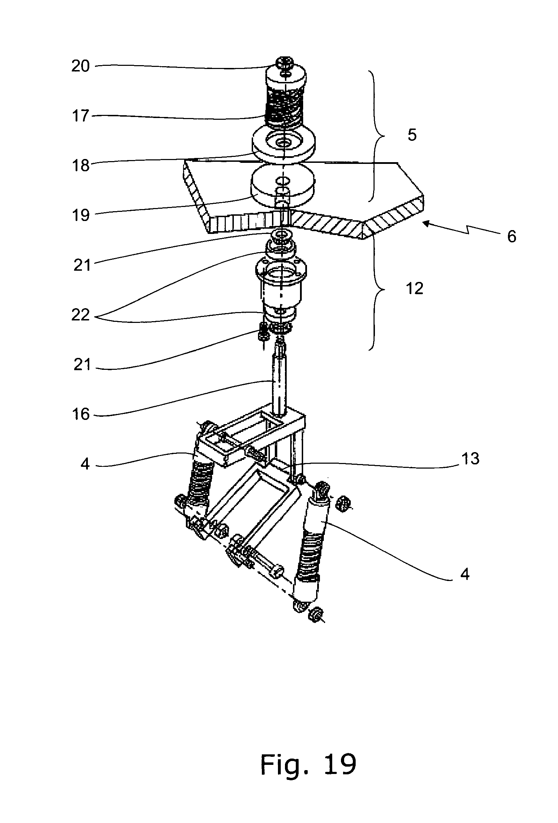

En référence à la figure 19, on décrira maintenant le détail d'un train routier 3. Ce train routier 3 comporte une roue (non représentée sur la figure 19), montée dans un étrier 13 de support de roue. Cet étrier 13 comporte une partie pivotante permettant, selon des dispositions classiques, de mettre en place des moyens amortisseurs 4 de la roue par rapport au châssis 6. Dans cet exemple, les moyens amortisseurs 4 sont ici doubles et comportent deux ressorts disposés de part et d'autre de la roue. Le cas échéant, la présence d'un seul ressort ou tout autre moyen élastique peut être envisagé. Les moyens amortisseurs 4 permettent d'assurer une meilleure tenue de route de la remorque, en amortissant les défauts de nivellement de la route et en assurant une stabilité horizontale de la remorque. L'étrier 13 est couplé à un axe 16 de pivotement par une liaison en rotation autorisant une rotation de 360° de l'étrier 13. Cet axe 16 de pivotement traverse un palier de rotation 12 comportant des roulements 21. Le palier de rotation 12 est interposé entre l'étrier 13 et le châssis 6 de sorte que l'extrémité libre de l'axe 16 de pivotement dépasse de la face supérieure dudit châssis 6 à laquelle l'axe 16 de pivotement est lié par un frein à friction 5. L'extrémité libre de l'axe 16 de pivotement est pourvue d'un filetage. Selon une caractéristique essentielle de l'invention, le frein à friction 5 est pourvu de moyens élastiques 17 réglables comportant un premier disque 18, un second disque 19 et des moyens de serrage 20 constitués par un boulon vissé sur l'extrémité libre filetée de l'axe 16 de pivotement. Les moyens élastiques 17 réglables peuvent être constitués, par exemple et de manière non limitative, par l'empilement de rondelles de type Belleville (rondelles élastiques). On pourra également envisager des moyens élastiques équivalents sans sortir du cadre de la présente invention tels qu'un ressort de compression à spires. Le premier disque 18 est lié à l'axe 16 de pivotement de sorte qu'il soit simultanément entraîné en rotation. A cette fin, l'extrémité libre de l'axe 16 de pivotement peut comporter un méplat (non représenté) et la partie évidée du premier disque 18 peut présenter une forme correspondante afin de bloquer le premier disque 18 en rotation par rapport à l'axe 16 de pivotement. La rotation du premier disque 18 provoque ainsi la rotation de l'axe 16 de pivotement et réciproquement. Ce premier disque 18 sera avantageusement réalisé en acier. Le second disque 19 est, quant à lui, fixé au châssis 6, de préférence par l'intermédiaire d'une platine constitutive de ce dernier. Comme représenté à la figure 19, l'axe 16 de pivotement et les parties évidées des premier 18 et second 19 disques sont coaxiaux. L'effet de frein à friction est obtenu par la compression exercée par les moyens élastiques 17 sur le premier disque 18 en acier alors plaqué contre le second disque 19 en bronze. Le réglage de l'effort exercé par les moyens élastiques 17 est avantageusement obtenu par le degré de vissage du boulon 20 sur le filetage de l'extrémité libre de l'axe 16 de pivotement.

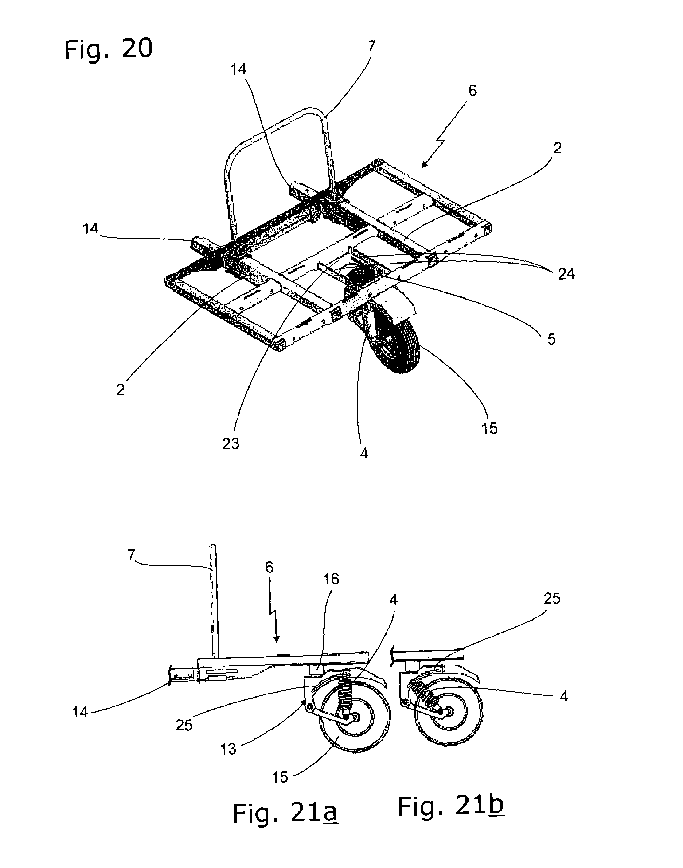

En référence à la figure 20, et selon une caractéristique avantageuse du mode de réalisation d'exécution représenté, le train routier 3 peut être monté sur une platine 23 comportant des rainures de guidage 24 (dont une seule est visible sur cette figure) permettant avantageusement de déplacer le train routier 3 vers l'avant ou l'arrière du châssis 6 afin de modifier la position du centre de gravité en fonction de la charge supportée par la remorque.

Une autre caractéristique du mode de réalisation représenté à la figure 20 apparaît aux figures 21a et 21b. Selon ce mode de réalisation avantageux, la partie supérieure du train routier 3 comporte une glissière 25 de forme courbe. Les moyens amortisseurs 4 comportent dans cet exemple deux ressorts disposés de part et d'autre de la roue 15. Dans d'autres variantes de réalisation non représentées, les ressorts peuvent être remplacés par tout autre moyen de rappel élastique équivalent. Chaque ressort 4 est relié par l'une de ses extrémités à la partie articulée pivotante de l'étrier 13 tandis que l'autre extrémité circule dans la glissière 25. Il est ainsi possible de régler la résistance des amortisseurs 4 sans en modifier la longueur, par application de triangles des forces. On comprend bien l'intérêt de cette conception simple et efficace du moyen de réglage de la dureté de la suspension sans modification de la hauteur de la remorque. Dans cet exemple, La configuration illustrée en figure 21a représente une configuration de réglage optimale pour des charges lourdes dans laquelle l'axe de chaque ressort 4 est sensiblement vertical pour être sensiblement parallèle à la force du poids de la charge transportée. La figure 21b représente une configuration de réglage optimale pour des charges légères dans laquelle chaque ressort 4 est incliné par rapport à la verticale.

Enfin, on notera avantageusement que les dimensions de la remorque sont aisément adaptables afin de présenter une largeur limitée et une profondeur réduisant la longueur totale de l'ensemble véhicule tracteur et remorque.

En outre, cette conception simplifiée et optimisée de du système de remorque permet d'obtenir, avec une réalisation en acier des principales pièces structurelles (châssis 6, rampes de chargement 8 et rails 9 notamment), un système de remorque pesant moins de 500 kg. Aucun, permis de conduire spécifique n'est alors nécessaire. De plus, cela permet avantageusement de ne pas dépasser les limites de poids total autorisé en charge d'un camping-car (3 tonnes 5), au-delà il est nécessaire de posséder un permis de conduire de type poids lourd.

On comprend bien le confort d'utilisation du système de remorque selon l'invention, dont l'accrochage est facilité par la présence de deux ferrures d'attelage. De plus, la manoeuvre, notamment en marche arrière, est également facilitée. En effet, une mise en travers de la remorque ne peut se produire avec ce type de remorque à roues pivotantes. La remorque représente une stabilité en charge remarquable à vitesse de circulation. La conception spécifique des trains routiers de la remorque selon l'invention permet de supprimer les dangers qui auraient pu provenir des phénomènes de guidonnage.

## Revendications

1. Système de remorque à roue(s) pivotante(s) pour le transport d'engins motorisés, bicyclettes, coffres arrière, particulièrement pour les camping-caristes, ledit système de remorque comportant une ferrure d'attelage (10) destinée à être fixée sur un véhicule tracteur et comportant au moins deux boules d'attelage (11) positionnées de part et d'autre de l'axe médian de ladite ferrure d'attelage (10), ledit système de remorque comportant également une remorque comprenant au moins deux systèmes de fixation (14) destinés à s'enclencher sur lesdites deux boules d'attelage (11), ladite remorque comprenant également un châssis (6) de remorque muni d'au moins un train routier (3) comportant au moins une roue (15) pivotante libre, montée dans un étrier (13) relié audit châssis (6) par un axe (16) de pivotement, **caractérisé en ce que** ledit axe (16) de pivotement de ladite roue (15) est couplé à au moins un frein à friction (5) anti-guidonnage comportant des moyens élastiques (17) réglables en effort pour limiter le phénomène de guidonnage de ladite remorque de manière adaptée et en fonction de la charge transportée.

2. Système de remorque selon la revendication 1,
**caractérisé en ce que** lesdits moyens élastiques (17) réglables en effort comportent au moins un premier et un second disques (18, 19) portés par ledit axe (16) de pivotement et sollicités l'un vers l'autre par des moyens élastiques (17) dont la tension peut être ajustée par la position de moyens de serrage (20) le long dudit axe (16) de pivotement.

3. Système de remorque selon l'une quelconque des revendications 1 et 2, **caractérisé en ce que** lesdits systèmes de fixation (14) destinés à s'enclencher sur lesdites boules d'attelage (11) sont prolongés chacun par un timon (2) constituant un côté raidisseur du châssis (6) de la remorque.

4. Système de remorque selon l'une quelconque des revendications 1 à 3, **caractérisé en ce que** ledit train routier (3) comporte des moyens amortisseurs (4) réglables pour améliorer la stabilité de ladite remorque.

5. Système de remorque selon la revendication 4,
**caractérisé en ce que** la partie supérieure dudit train routier (3) comporte une glissière (25), **en ce que** lesdits moyens amortisseurs (4) comportent au moins un moyen de rappel élastique dont une première extrémité est couplée à l'axe de ladite roue (15) et une seconde extrémité est couplée à ladite glissière (25) de manière à ce que la position de ladite seconde extrémité dans ladite glissière (25) soit réglable pour pouvoir incliner ledit moyen de rappel élastique sans modification de la hauteur de ladite remorque.

6. Système de remorque selon la revendication 5,
**caractérisé en ce que** ladite glissière (25) est courbe.

7. Système de remorque selon l'une quelconque des revendications 1 à 6, **caractérisé en ce que** ledit train routier (3) est fixé audit châssis (6) par l'intermédiaire d'au moins une rainure de guidage (24) agencée pour autoriser le déplacement dudit train routier (3) vers l'avant ou l'arrière dudit châssis (6) afin de modifier la position du centre de gravité en fonction de la charge supportée par ladite remorque.
